Europäisches Patentamt

European Patent Office

Office européen des brevets

(19)

(11) Veröffentlichungsnummer: **0 250 602 B1**

(12) # EUROPÄISCHE PATENTSCHRIFT

(45) Veröffentlichungstag der Patentschrift:
07.08.91 Patentblatt 91/32

(51) Int. Cl.$^5$: **B01D 29/11**

(21) Anmeldenummer: **87900742.5**

(22) Anmeldetag: **17.12.86**

(86) Internationale Anmeldenummer:
**PCT/SU86/00136**

(87) Internationale Veröffentlichungsnummer:
**WO 87/03823 02.07.87 Gazette 87/14**

(54) **Vorrichtung zum Filtern von Flüssigkeiten oder Gasen.**

(30) Priorität: **24.12.85 SU 3988608**

(43) Veröffentlichungstag der Anmeldung:
**07.01.88 Patentblatt 88/01**

(45) Bekanntmachung des Hinweises auf die
Patenterteilung:
**07.08.91 Patentblatt 91/32**

(84) Benannte Vertragsstaaten:
**AT DE FR GB IT**

(56) Entgegenhaltungen:
**US-A- 4 147 114**

(73) Patentinhaber: **TREST 'JUZHVODOPROVOD'**
**ul. Gagarina, 135/1**
**Krasnodar, 350049 (SU)**

(72) Erfinder: **SHISHKIN, Viktor Vasilievich**
**ul. Festivalnaya, 16-5**
**Krasnodar, 350049 (SU)**

(74) Vertreter: **Finck, Dieter et al**
**Patentanwälte v. Füner, Ebbinghaus, Finck**
**Mariahilfplatz 2 & 3**
**W-8000 München 90 (DE)**

## Beschreibung

Die Erfindung betrifft eine Vorrichtung zum Filtern von Flüssigkeiten oder Gasen.

Die erfindungsgemäße Vorrichtung ist besonders für eine Beseitigung von Festteilchen in chemischen Produkten, für eine Trink- und Umlaufwasserreinigung, für eine Reinigung von Industrieabwässern, für eine Wasserentschlammung sowie für eine Luftentstaubung geeignet.

Außerdem kann sie zur Entfernung chemischer Einschlüsse bei einer Flüssigkeits- oder Gasreinigung sowie bei einer Luftoder Gastrocknung verwendet werden.

Bei einer aus dem SU-A-985 39 bekannten Vorrichtung zum Filtern von Flüssigkeiten oder Gasen muß der Filtervorgang zum Reinigen des Filterelements periodisch unterbrochen werden, so daß der Wirkungsgrad der Vorrichtung gering ist. Da diese Vorrichtung nicht druckdicht geschlossen ist, können mit ihr keine giftigen und überriechenden Stoffe filtriert werden, ohne daß diese ins Freie austreten.

Der Erfindung liegt die Aufgabe zugrunde, mit konstruktiv einfachen Mitteln eine Vorrichtung zum Filtern von Flüssigkeiten oder Gasen mit hohem Wirkungsgrad zu schaffen, mit der sich auch giftige und überriechende Stoffe filtrieren lassen.

Diese Aufgabe wird erfindungsgemäß dadurch gelöst, daß ein langgestrecktes, druckdichtes und geschlossenes Gehäuse vorgesehen ist, das durch eine Trennwand in zwei Abschnitte geteilt ist, die eine Schlitzöffnung aufweist, durch die ein Filterschlauch beweglich geführt ist. Die Enden des Filterschlauchs sind nach außen umgestülpt und mit ihrem Umfang an der Innenfläche des Gehäuses im Bereich der Trennwand befestigt. Dadurch sind zwischen Trennwand und Filterschlauch zwei Kammern und außerhalb des Filterschlauchs zwischen Gehäuse und Filterschlauch zwei Hohlräume gebildet. Die Kammern sind jeweils mit der Zuführeinrichtung für das zu filtrierende Medium und der Abführeinrichtung für den Rückstand verbunden, während die Hohlräume jeweils mit der Ableiteinrichtung für das Filtrat verbunden sind.

Da bei der erfindungsgemäßen Vorrichtung der Filterschlauch durch die Schlitzöffnung in der Trennwand bewegt wird, wird er während des Filtervorgangs kontinuierlich von Rückstand befreit. Da der Filtervorgang für eine Reinigung des Filterschlauches nicht unterbrochen werden muß, ist der Wirkungsgrad der Vorrichtung hoch. Aufgrund des druckdichten und geschlossenen Gehäuses, können mit der Vorrichtung auch giftige und überriechende Stoffe gefiltert werden, ohne daß diese ins Freie austreten.

Zweckmäßigerweise ist die Trennwand im Bereich der Schlitzöffnung mit bogenförmigen Kratzern versehen, die an der Trennwand im Abstand zueinander angeordnet sind und deren konkave Flächen einander zugewandt sind.

Die bogenförmigen Kratzer verbessern die Reinigung des Filterelements dadurch, daß Teile der zu filtrierenden Flüssigkeit in den durch die konkaven Flächen des Kratzers gebildeten Hohlraum eindringen und den Rückstand von der Oberfläche des Filterelements wegspülen.

Ein Ausführungsbeispiel der Erfindung wird anhand einer Zeichnung, die eine Vorrichtung zum Filtern von Flüssigkeiten oder Gasen zeigt, näher erläutert.

Die Vorrichtung hat ein abgedichtetes hohles Gehäuse 1, in dem als biegsames Filterelement ein Schlauch 2 angeordnet ist. Die Enden des Schlauches 2 sind nach außen umgestülpt und mit ihrem Umfang an der Innenfläche des Gehäuses 1 befestigt. Außerhalb des Schlauches 2 bildet der Schlauch 2 mit dem Gehäuse 1 Abschnitte 3 und 4, die über Stutzen 5 bzw. 6 und ein Ventil 7 mit einer Ableiteinrichtung 8 für gefiltertes Medium in Verbindung stehen.

Im zentralen Bereich des Gehäuses 1 ist zwischen den befestigten Enden des Schlauches 2 eine Trennwand 9 mit einer Schlitzöffnung 10 vorgesehen durch die der Schlauch 2 geführt ist. Die Schlitzöffnung 10 geht durch zwei bogenförmige Kratzer 11 hindurch, die an der Trennwand 9 in Abstand zueinander angebracht sind, und deren konkave Flächen gegenseitig zugewandt sind. Die trennwand 9 teilt den von dem Schlauch 2 eingeschlossenen Hohlraum des Gehäuses 1 in zwei Kammern 12 und 13 auf, die jeweils über einen Stutzen 14 bzw. 15 und ein Ventil 16 mit einer Zuführeinrichtung 17 für zu filtrierendes Medium und über Stutzen 18 bzw. 19 und ein Ventil 20 mit einer Abführeinrichtung 21 für Rückstand in Verbindung steht. Der durch die konkaven Flächen gebildete Hohlraum 22 zwischen den Kratzern 11 ist ebenfalls über einen Stutzen 23 und das Ventil 20 mit der Abführeinrichtung 21 verbunden.

Für einen Filtervorgang wird das Ventil 16 geöffnet und das zu filtrierende Medium mit Hilfe der Zuführeinrichtung 17 über den Stutzen 14 in die Kammer 12 geführt. Das zu filtrierende Medium fließt durch die Stirnfläche des Schlauchs 2 in den Abschnitt 3, aus dem es über den Stutzen 5, das geöffnete Ventil 7 und die Ableiteinrichtung 8 unter Druck in einen entsprechenden (nicht dargestellten) Behälter gefördert wird. Je nach der Verschmutzung des Schlauches 2 nimmt der Filterungswiderstand zu und der Schlauch 2 bewegt sich in den Abschnitt 3, wobei eine saubere Oberfläche des Schlauches 2 in den Filtrierbereich verschoben wird. Durch die Schlitzöffnung 10 in der Trennwand 9 gelangt dabei der Schlauch 2 aus dem Abschnitt 4 in den Abschnitt 3. Während der Verschiebung wird der Schlauch 2 durch die Kratzer 11 gereinigt. Eine zusätzliche Reinigung des Schlauches 2 erfolgt außerdem dadurch, daß ein Teil des Stromes der zu reinigenden Flüssigkeit durch die Schlitzöffnung 10 aus der Kammer 12 in den Hohlraum 22 eindringt und dabei den auf dem Schlauch 2 abgesetzten Rückstand wegspült. Der weggespülte Rückstand sammelt sich im wesentlichen in dem Hohlraum 22 zwischen den Kratzern 11 an. Weiterer Rückstand sammelt sich an der Innenfläche des Gehäuses 1 im Bereich der Trennwand 9 an. Er gelangt über die Stutzen 18, 19 und 23 und das Ventil 20 mit Hilfe der Abführeinrichtung 21 in einen entsprechenden (nicht dargestellten) Speicher. Bei der Bewegung des Schlauches 2 in den Abschnitt 3 aus dem Abschnitt 4 wird im Abschnitt 4 ein Unterdruck erzeugt, wodurch der Filtriergrad des Mediums erhöht wird.

Nachdem der Schlauch 2 das Stirnende des Gehäuses 1 erreicht hat, wird das Ventil 16 umgeschaltet, woraufhin das zu filtrierende Medium über den Stutzen 15 in die Kammer 13 einströmt. Dabei beginnt sich der Schlauch 2 aus dem Abschnitt 3 in den Abschnitt 4 zu bewegen. Sobald der Schlauch 2 die andere Stirnseite des Gehäuses 1 erreicht hat, wird der Filtrierzugklus wiederholt. Die Verschiebung des Schlauches 2 erfolgt aufgrund einer Druckdifferenz in den Kammern 12 und 13. Die Höhe der Druckdifferenz wird durch die den Kammern 12 und 13 zugeführte Menge der Flüssigkeit oder des Gases bestimmt.

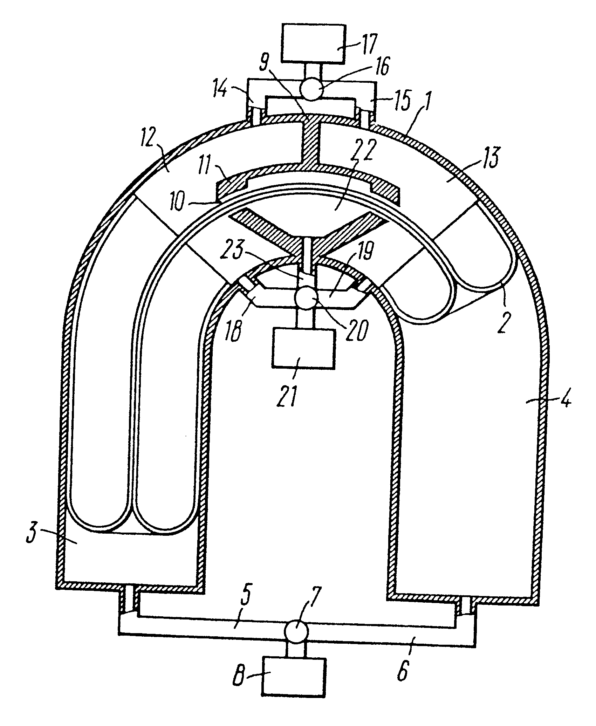

## Patentansprüche

1. Vorrichtung zum Filtern von Flüssigkeiten oder Gasen, mit einem langgestreckten, druckdichten und geschlossenen Gehäuse (1), das durch eine Trennwand (9) in zwei Abschnitte aufgeteilt ist, die eine Schlitzöffnung (10) aufweist, durch die ein Filterschlauch (2) beweglich hindurchgeführt ist, dessen Enden nach außen gestülpt und mit ihrem Umfang an der Innenfläche des Gehäuses (1) im Bereich der Trennwand (9) befestigt sind, wodurch zwischen Trennwand (9) und Filterschlauch (2) zwei Kammern (12, 13) und außerhalb des Filterschlauchs (2) zwischen Gehäuse (1) und Filterschlauch zwei Hohlräume (3, 4) gebildet sind, wobei die Kammern (12,13) jeweils mit der Zufuhreinrichtung (17) für das zu filtrierende Medium und der Abführeinrichtung (21) für den Rückstand und die Hohlräume (3,4) jeweils mit der Ableiteinrichtung (8) für das Filtrat verbunden sind.

2. Vorrichtung nach Anspruch 1, dadurch **gekennzeichnet**, daß die Trennwand (9) im Bereich der Schlitzöffnung (10) mit bogenförmigen Kratzern (11) versehen ist, die im Abstand zueinander angeordnet sind und deren konkave Flächen einander zugewandt sind.

## Claims

1. A device for the filtration of liquids or gases, having an elongate, pressure-tight and closed casing (1) which is divided into two portions by a partition wall (9) comprising a slot opening (10) through which passes a filtering tube (2), the ends of which are turned over towards the outside and are secured by their periphery to the inner face of the casing (1) in the region of the partition wall (9), so that two chambers (12, 13) are formed between the partition wall (9) and the filtering tube (2) and two cavities (3, 4) are formed outside the filtering tube (2) between the casing (1) and the filtering tube, the chambers (12, 13) each being connected to the supply device (17) for the medium to be filtered and to the removal device (21) for the residue, and the cavities (3, 4) each being connected to the drain device (8) for the filtrate.

2. A device according to Claim 1, characterized in that the partition wall (9) is provided in the region of the slot opening (10) with curved scrapers (11) which are arranged at a distance from one another and the concave faces of which face one another.

## Revendications

1. Dispositif pour le filtrage d'un milieu fluide ou gazeux, comprenant un boîtier (1) de forme oblong, étanche à la pression et fermé et qui est séparé par une cloison en deux parties, qui comporte une ouverture en forme d'une fente (10) à travers laquelle est amené de façon mobile un tuyau de filtrage (2) dont les extrémités sont retournées vers l'extérieur et fixées à leur périphérie à la surface interne du boîtier (1), dans la zone de la cloison (9), ce qui donne lieu à la formation entre la cloison (9) et le tuyau de filtrage (2) de deux chambres (12, 13), et à l'extérieur du tuyau de filtrage (2) entre le boîtier (1) et le tuyau de filtrage de deux espaces creux (3, 4), les chambres (12, 13) étant reliées chacune au dispositif d'amenée (17) du milieu à filtrer et au dispositif d'évacuation (21) du résidu et les espaces creux (3, 4) étant reliés chacun au dispositif de sortie (8) du filtrat.

2. Dispositif selon la revendication 1, caractérisé en ce que la cloison (9) est pourvue dans la zone de l'ouverture en forme de fente (10) de racloirs arqués (11) qui sont disposés à une certaine distance les uns des autres et dont les surfaces concaves sont situées en regard.